# EUROPEAN PATENT APPLICATION

(11) **EP 2 271 102 A1**
(43) Date of publication of application: **05.01.2011**
(21) Application number: 09305613.3
(22) Date of filing: 29.06.2009
(51) Int. Cl.: H04N 7/26, H04N 7/32, H04N 7/50

(54) **Adaptive residual image coding**

(71) Applicant: Thomson Licensing, 92130 Issy-les-Moulineaux (FR)
(72) Inventor: Yang, Jiheng, 100085, Beijing (CN); Li, Yumeng, 100085, Beijing (CN)
(74) Representative: Rittner, Karsten

(57) **Abstract**

The invention is made in the field of residual coding and proposes a method for encoding a residual of an image data array with respect to a reference image data array, said method comprises the steps of generating a set of residual candidates comprising said residual and a first re-ordered residual generated by applying a first reordering pattern to the residual, transforming the residual candidates of the set, determining one of the transformed residual candidates which is at least as advantageous, in terms of at least one of coding cost and coding quality, as any other of the remaining transformed residual candidates, entropy encoding the determined one of the transformed residual candidates using the scan order, and encoding a first flag bit indicating whether the determined one of the transformed residual candidates is the transformed residual.

This allows for optimized coding in terms of coding efficiency and/or image distortion.

## Description

### TECHNICAL FIELD

The invention is made in the field of residual coding.

### BACKGROUND OF THE INVENTION

Residual coding exploits the fact that redundancy occurs in still image or video image data, frequently. That is, an image data array to-be-encoded, e.g. a block, a macro-block or a slice of an image, commonly has some similarity with an encoded reference image data array belonging to the same or a different image.

Thus, instead of encoding the image data array as is the residual of the image data array with respect to the reference image data array is encoded.

Residual encoding commonly comprises transformation into a frequency domain using a discrete cosine transform or a wavelet transform, for instance.

After transformation, coefficients of the transform are scanned according to a scan order and encoded using an entropy encoding method.

European Patent 1,679,903 A2 proposed a digital media codec which adaptively rearranges the scan order in order to improve entropy encoding efficiency.

### SUMMARY OF THE INVENTION

The current invention proposes an approach which optimizes residual encoding in terms of at least one of coding cost and coding quality.

That is, a method for encoding a residual according to claim 1 is proposed. Said method comprises generating a set of residual candidates comprising said residual and a first re-ordered residual generated by applying a first reordering pattern to the residual, transforming the residual candidates of the set, determining one of the transformed residual candidates which is at least as advantageous, in terms of at least one of coding cost and coding quality, as any other of the remaining transformed residual candidates, entropy encoding the determined one of the transformed residual candidates using the scan order, and encoding a first flag bit indicating whether the determined one of the transformed residual candidates is the transformed residual.

In an embodiment, said set of residual candidates further comprises a second re-ordered residual generated by applying a different second reordering pattern to the residual and said method comprises encoding, at least if the first flag bit indicates that the determined one of the transformed residual candidates is not the transformed residual, a second flag bit indicating whether the determined one of the transformed residual candidates is the transform of the first or the second re-ordered residual.

In another embodiment, determining said one of the transformed residual candidates comprises determining, for each of the transformed residual candidates, a rate-distortion-cost.

Further, a method for encoding an image data array, said method comprises the steps of determining a residual of the image data array with respect to a reference image data array, encoding reference information referencing the reference image data array, and encoding the residual according to the proposed method for encoding of a residual or one of its embodiments is proposed.

A corresponding method for determining a residual using encoded data and an encoded first flag bit, said residual being a residual of an image data array with respect to.a reference image data array, said method comprising the features of claim 5, is proposed, also.

In an embodiment of said method for determining a residual, a second encoded flag bit is further used for determining the residual, wherein said method further comprises decoding the second encoded flag bit and using the second flag bit for determining a re-ordering pattern for re-ordering the preliminary residual.

In correspondence to the proposed method for encoding an image data array, a method for decoding an image data array is further proposed, wherein said method for decoding comprises the steps of decoding reference information, using the reference information for retrieving a reference image data array from a storage device, determining a residual according to said corresponding method for determining a residual or its embodiment, and reconstructing the image data array by combining the reference image data array with the determined residual.

There are embodiments of each of said proposed methods wherein:
- said image data array is an image block and said reference image data array is a reference image block,
- said image data array is an image macro-block and said reference image data array is a reference image macro-block, or
- said image data array is an image slice and said reference image data array is a reference image slice.

The invention also proposes a decoder for decoding an image data array, said decoder comprising decoding means for decoding encoded reference information, encoded data and an encoded first flag bit, inverse transforming means adapted for inverse transforming the data, re-ordering means for reordering the inverse transformed data, determining means for determining a residual, said determining means being adapted for using the first flag bit for determining whether the inverse transformed data has to be re-ordered for being used as the residual, retrieving means adapted for using the reference information for retrieving a reference image data array from a storage device, and reconstructing means adapted for combining the reference image data array with the determined residual for reconstructing the block.

And, the invention proposes an encoder for encoding an image data array, said encoder comprising means for determining a residual of the image data array with respect to a reference image data array, means for transforming the residual and encoding means for encoding the transformed residual and reference information referencing the reference image data array, wherein the encoding means are adapted for encoding the residual using the proposed method for encoding of a residual or one of its embodiments.

As well, a storage device or bit stream carrying an encoded data and an encoded first flag bit is proposed, wherein said encoded first flag bit indicating whether the encoded data represents a transform of a re-ordered residual.

In an embodiment, said storage device or said bit stream, respectively, further carries an encoded second flag bit, said second flag bit indicating a reordering pattern according to which the re-ordered residual is re-ordered.

### BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's scope and spirit defined in the claims.

In the figures:
- Fig. 1: depicts an exemplary original 4x4 residual block and an corresponding rearranged 4x4 residual block resulting from application of an exemplary rearrangement strategy,
- Fig. 2: depicts transform coefficients of the exemplary original 4x4 residual block and the corresponding rearranged 4x4 residual block of figure 1,
- Fig. 3: depicts four exemplary rearrangement strategies and exemplary rearrangement at macroblock level,
- Fig. 4: depicts three exemplary levels of rearrangement,
- Fig. 5: depicts a flow diagram of an exemplary embodiment of the inventive residual encoding method and
- Fig. 6: depicts a flow diagram of an exemplary embodiment of the inventive residual determining method.

### EXEMPLARY EMBODIMENTS OF THE INVENTION

The invention may be realized on any electronic device comprising a processing device correspondingly adapted. For instance, the invention may be realized in a television, a mobile phone, a personal computer, a digital still camera, a digital video camera, an mp3-player, a navigation system or a car audio system.

Different distributions of errors in residual blocks can result in different distributions of transform coefficients. However, current video coding algorithms have not pay attention to this issue. The proposed method will take advantage of rearrangement of errors in residual blocks to get an optimal error distribution in a residual block to improve coding efficiency.

In this invention, an original residual block is rearranged to get one or more rearranged residual blocks. All the rearranged residual blocks as well as the original residual block are transformed and decision algorithms are proposed to judge the best residual block based on the transform coefficients. The transform coefficients of the best residual block are coded into bit-stream. Additional syntax elements are written into bit-stream to ensure correct decoding.

Instead of using only one original residual block to transform and coding, errors in an original residual block are rearranged before transform. Accordingly, rearranged residual blocks with different error distributions are generated. To get the residual block with best error distribution, decision algorithms based on the transform coefficients of rearranged residual blocks are proposed. A syntax element is proposed to add into bit-stream to notify decoder of the right residual scan order for every residual block.

If prediction errors in an original residual block are rearranged and all the generated rearranged residual blocks as well as the original residual block are transformed using a same residual scan order pattern, there is a set of transform block from which an optimal one can be chosen. The transform block of one candidate rearranged block, which can achieve a better coding efficiency, are chosen to be scanned in frequency domain according to a predetermined scan order like zigzag scan or alternative scan and then coded into bit-stream.

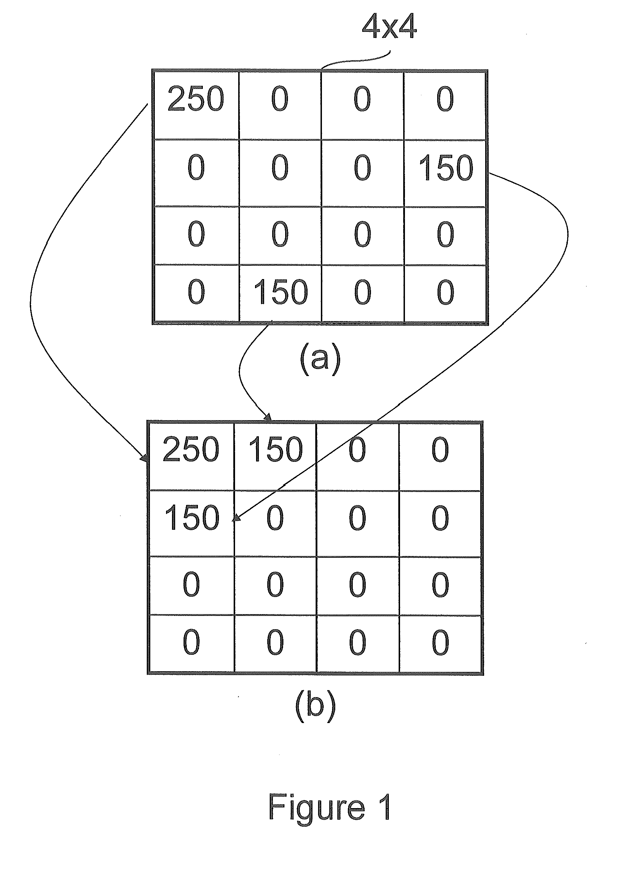

Fig. 1 shows in Fig. 1(a) an exemplary original 4x4 residual block and in Fig. 1(b) a rearranged residual block generated from the exemplary original 4x4 residual block according to an exemplary reordering strategy. Arrows in Fig 1 illustrate the exemplary rearrangement strategy.

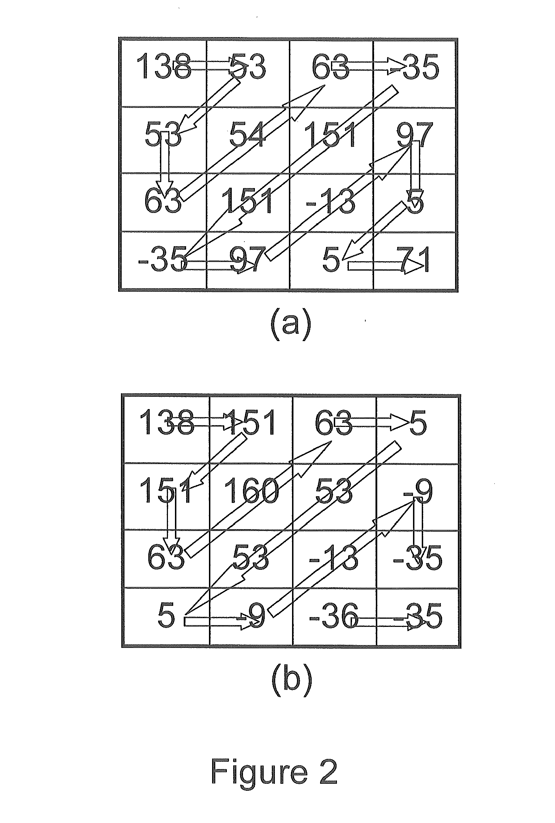

Applying a transform with a predefined residual scan order to the two exemplary residual blocks of Fig. 1 results in two transform blocks shown in Fig 2(a) and Fig 2(b).

If the transform coefficients of both transform blocks are scanned in zigzag order as exemplarily depicted in Fig 2, the transform coefficients of rearranged residual block can achieve a better coding efficiency, e.g. in terms of bit rate for a fixed distortion level, due to its centralized distribution.

The design of rearrangement strategies are by nature flexible. One can adjust candidate rearrangement orders in a customized manner according to the circumstances. To illustrate the proposed idea, H.264/AVC is taken as an example in the following part. It is to be noted that rearrangement strategies are not limited to the following sample one and all the other strategies are also within the scope and spirit of this disclosure.

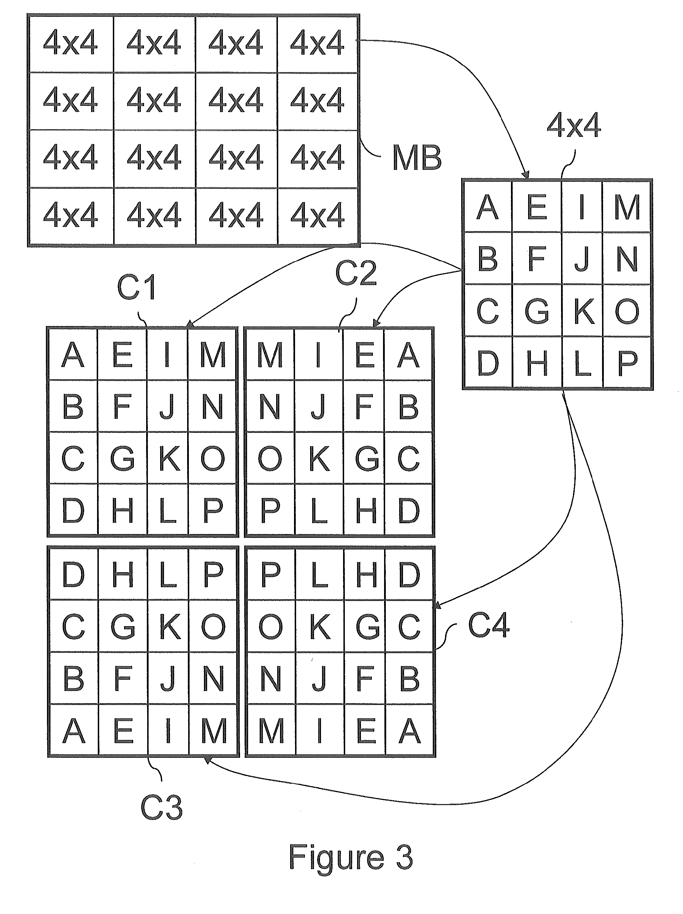

As shown in Fig. 3, each macroblock MB comprises sixteen blocks 4x4 and each block 4x4 is transformed as a unit in H.264/AVC baseline/main profile. Four sample rearranged residual blocks for each 4x4 block are shown in Fig 3. All the four rearranged residual blocks will be transformed to decide the optimal order of residual values to be coded into bit-stream.

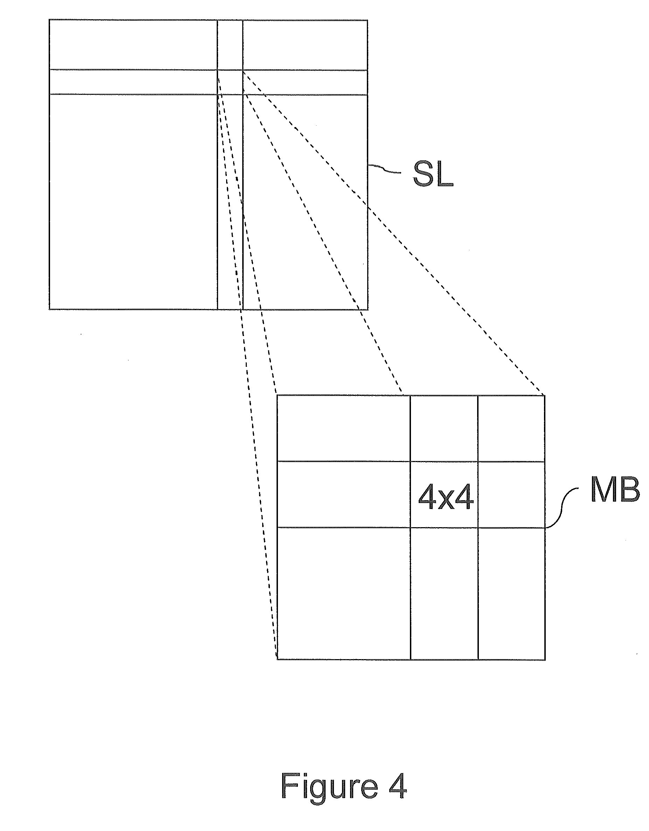

It is to be noted that rearrangement strategy can be performed at different levels. For example, reordering may be applied to 4x4 residual blocks to 16x16 residual macroblocks or any other n-times-m residual array, called a unit in the following, wherein n and m may take any positive integer value only limited by the number of rows and columns comprised per image. As well, any combination of blocks, macroblocks or units should be in the scope and spirit of the invention. As exemplarily shown in Fig 4, three sample levels are chosen to illustrate the idea in H.264/AVC: 4x4 block 4x4, macroblock MB, slice SL.

An exemplary strategy for rearrangement at 4x4 residual block level is shown in Fig 3. Each of the 4x4 blocks of macroblock MB has its own best rearranged residual block to be coded into bit-stream. At 16x16 macroblock level, all the 126 errors in the residual macroblock may be ordered according a macroblock rearrangement strategy together such that each macroblock residual value may be moved to any possible location in the macroblock. And at slice level, all errors in the residual slice may be ordered according to a slice rearrangement strategy together such that each slice residual value may be moved to any possible location in the slice.

Or, rearrangement is hierarchally, i.e. first residual values are reordered in each 4x4 block, then, the reordered blocks as a whole may be re-arranged at macroblock level, and finally the re-ordered macroblocks as a whole may be re-arranged within a slice.

When transform units for each rearranged residual units are generated, an automatic decision algorithm implemented on a processor should be performed to decide which one is at least as optimal as all the other transform units and thus is coded into bit-stream for transmission or for storage. The optimization criterion may be improved coding efficiency, for instance. But, the design of decision algorithms is flexible and other optimization criteria are possible. The decision strategy can be customized according to different circumstances.

For instance, Rate-Distortion costs may be the optimization criterion to decide whether there is a rearranged residual unit superior to the original residual unit in terms of rate-distortion costs.

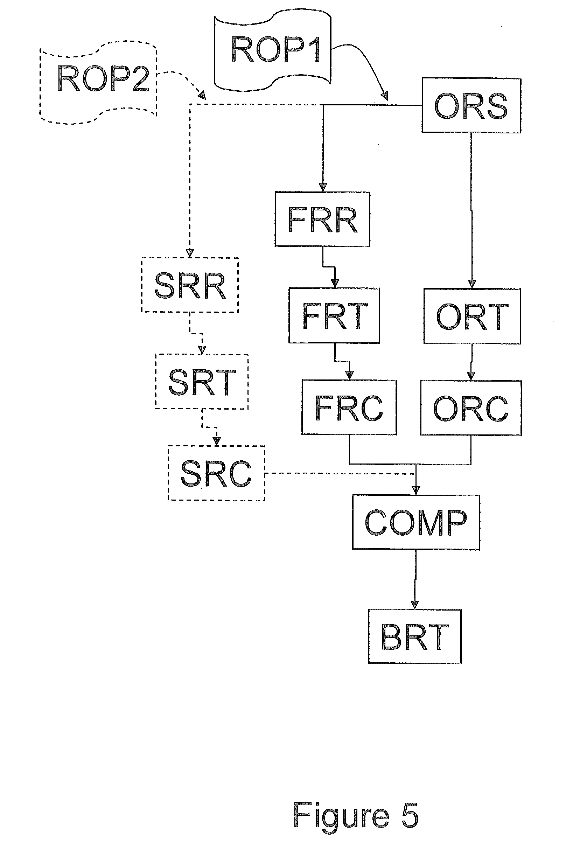

As exemplarily shown in Fig 5, original residual unit ORS will be rearranged at least according to a first rearrangement strategy, also called first re-ordering pattern ROP1, to get a first reordered residual unit FRR. As indicated by dashed lines, a second re-ordering strategy ROP2 may or may not be further applied to yield a second re-ordered residual unit SRR.

All the rearranged residual units FRR, SRR as well as the original residual unit ORS are transformed using a predefined scan order to yield transform units ORT, FRT and, in case more than one strategy ROP1, ROP2 is applied, SRT.
for each of the resulting transform coefficients units ORT, FRT, and may be SRT, rate-distortion costs ORC, FRC and may be SRC are calculated. By comparing COMP rate-distortion cost ORC, FRC and may be SRC, it is decided which unit is chosen to be coded into bit-stream in order to achieve improved encoding efficiency without introducing further distrortion.

An additional syntax element RI of one or more bits indicating rearrangement is added into bit-stream to notify a decoder whether re-arrangement occurred and, in case that there are more than one re-order strategies which may have been applied, which of the strategies was used for a current block. The strategies may be enumerated in a list and notification may be limited to indication of the respective list entry.

In an embodiment, additional syntax element rI indicates change of re-ordering pattern.

Syntax element RI can be written into different parts of bit-stream, such as slice header or macroblock layer and so on. Besides that, syntax element RI may be coded in multiple ways to get better compression performance before they are written into bit-stream.

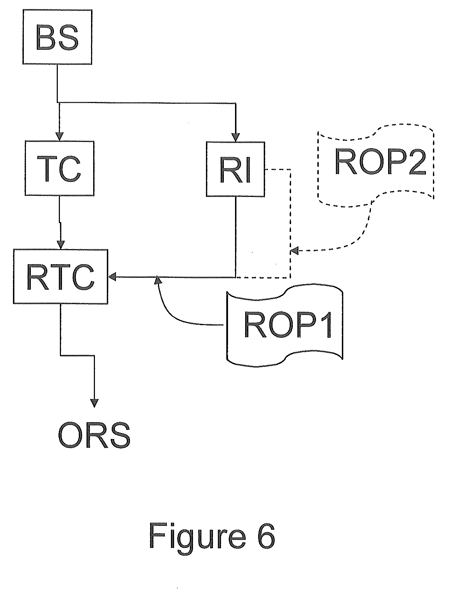

As exemplarily depicted in Fig. 6, syntax element RI is separated from bit stream BS and used to decide whether transform coefficients TC further extracted from the bit stream need to be re-ordered. In an embodiment, syntax element RI further conveys information on how re-ordering has to take place by referring one of several reordering patterns ROP1 and ROP2. Application of the indicated reordering strategy, if any, then results in a possibly re-ordered transform coefficient unit RTC. Inverse transformation of RTC then allows for reconstruction of original residual unit ORS.

The encoder and decoder will set up a protocol to define which rearrangement strategy and decision algorithm are used to decide the best rearrange residual block. This protocol will guide the decoder to parse the syntax index_rearranged_block. Thus the original residual block can be decoded to reconstruct the frame. It is worth noting that due to the flexibility of syntax element design, the index_rearranged_block syntax element can be defined in different syntax bodies, and also additional syntax elements may be added to indicate the type of rearrangement strategy and decision algorithm, but they are still in the definition scope of this proposed invention.

## Claims

1. Method for encoding a residual of an image data array with respect to a reference image data array, said method comprises the steps of
- generating a set of residual candidates comprising said residual and a first re-ordered residual generated by applying a first reordering pattern to the residual,
- transforming the residual candidates of the set,
- determining one of the transformed residual candidates which is at least as advantageous, in terms of at least one of coding cost and coding quality, as any other of the remaining transformed residual candidates,
- entropy encoding the determined one of the transformed residual candidates using the scan order, and
- encoding a first flag bit indicating whether the determined one of the transformed residual candidates is the transformed residual.

2. Method according to claim 1, wherein said set of residual candidates further comprises a second re-ordered residual generated by applying a different second reordering pattern to the residual and wherein said method comprises encoding, at least if the first flag bit indicates that the determined one of the transformed residual candidates is not the transformed residual, a second flag bit indicating whether the determined one of the transformed residual candidates is the transform of the first or the second re-ordered residual.

3. Method according to claim 1 or 2, wherein determining said one of the transformed residual candidates comprises determining, for each of the transformed residual candidates, a rate-distortion-cost.

4. Method for encoding an image data array, said method comprises the steps of
- determining a residual of the image data array with respect to a reference image data array,
- encoding reference information referencing the reference image data array, and
- encoding the residual according to one of the claims 1 to 3.

5. Method for determining a residual using encoded data and an encoded first flag bit, said residual being a residual of an image data array with respect to a reference image data array, said method comprises the steps of
- decoding the encoded data and the encoded first flag bit,
- determining a preliminary residual by inverse transforming the data,
- using the first flag bit for determining whether the preliminary residual is to be re-ordered, and,
- if so, reordering the preliminary residual and determining the residual as the re-ordered preliminary residual, and,
- otherwise, determining the residual as the preliminary residual.

6. Method according to claim 5, wherein a second encoded flag bit is further used for determining the residual, said method further comprising decoding the second encoded flag bit and using the second flag bit for determining a re-ordering pattern for re-ordering the preliminary residual.

7. Method for decoding an image data array, said method comprises the steps of
- decoding reference information,
- using the reference information for retrieving a reference image data array from a storage device,
- determining a residual according to claim 8 or 9, and
- reconstructing the image data array by combining the reference image data array with the determined residual.

8. Method according to one of the claims 1 to 7, wherein said image data array is an image block and said reference image data array is a reference image block.

9. Method according to one of the claims 1 to 7, wherein said image data array is an image macro-block and said reference image data array is a reference image macro-block.

10. Method according to one of the claims 1 to 7, wherein said image data array is an image slice and said reference image data array is a reference image slice.

11. Decoder for decoding an image data array, comprising
- decoding means for decoding encoded reference information, encoded data and an encoded first flag bit,
- inverse transforming means adapted for inverse transforming the data,
- re-ordering means for reordering the inverse transformed data,
- determining means for determining a residual, said determining means being adapted for using the first flag bit for determining whether the inverse transformed data has to be re-ordered for being used as the residual,
- retrieving means adapted for using the reference information for retrieving a reference image data array from a storage device, and
- reconstructing means adapted for combining the reference image data array with the determined residual for reconstructing the block.

12. Encoder for encoding an image data array, comprising
- means for determining a residual of the image data array with respect to a reference image data array,
- encoding means for encoding the residual and reference information referencing the reference image data array, said encoding means comprising means for transformation and means for entropy coding wherein
- the encoding means are adapted for encoding the residual according to one of the claims 1 to 3.

13. Storage device or bit stream carrying an encoded data and an encoded first flag bit, said encoded first flag bit indicating whether the encoded data represents a transform of a re-ordered residual.

14. Storage device or bit stream according to claim 13, further carrying an encoded second flag bit, said second flag bit indicating a reordering pattern according to which the re-ordered residual is re-ordered.
